# EUROPÄISCHE PATENTSCHRIFT

(11) **EP 0 775 061 B1**
(45) Veröffentlichungstag und Bekanntmachung des Hinweises auf die Patenterteilung: **30.06.1999**
(21) Anmeldenummer: 96902894.3
(22) Anmeldetag: 23.02.1996
(51) Int. Cl.: B60K 15/077

(54) **EINRICHTUNG ZUM FÖRDERN VON KRAFTSTOFF AUS EINEM VORRATSTANK ZU EINER BRENNKRAFTMASCHINE**
DEVICE FOR SUPPLYING FUEL FROM A TANK TO AN INTERNAL COMBUSTION ENGINE
DISPOSITIF POUR ACHEMINER DU CARBURANT D'UN RESERVOIR JUSQU'A UN MOTEUR A COMBUSTION INTERNE

(30) Priorität: 13.06.1995 DE 19521509
(43) Veröffentlichungstag der Anmeldung: 28.05.1997
(73) Patentinhaber: ROBERT BOSCH GMBH, 70442 Stuttgart (DE)
(72) Erfinder: KLEPPNER, Stephan, D-75015 Bretten (DE); SEITZ, Ansgar, D-73765 Neuhausen (DE)
(86) Internationale Anmeldenummer: DE9600303
(87) Internationale Veröffentlichungsnummer: WO9641727

(56) Entgegenhaltungen:
- DE-A- 3 510 890
- FR-A- 2 544 670
- GB-A- 2 271 327

## Beschreibung

### Stand der Technik

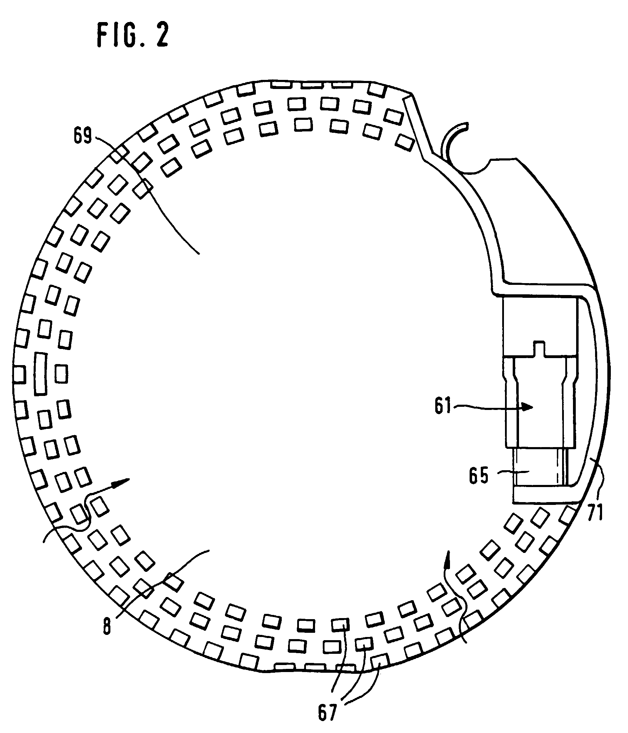

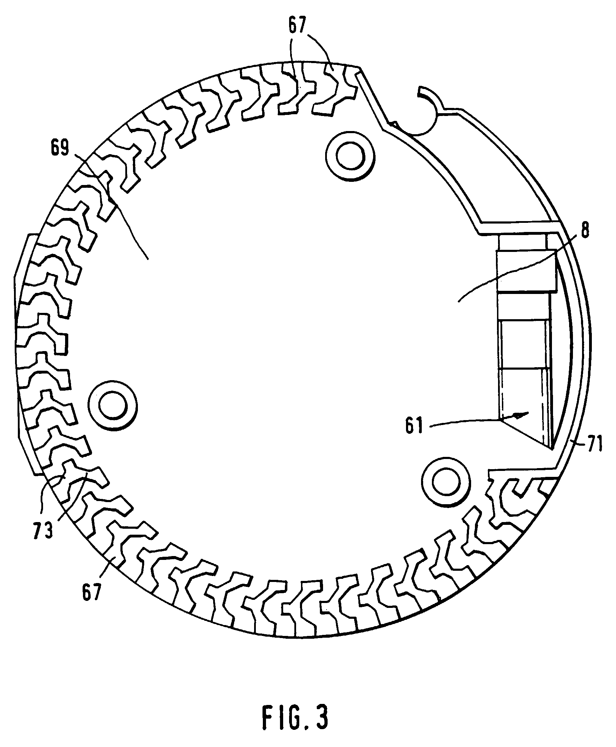

Die Erfindung geht von einer Einrichtung zum Fördern von Kraftstoff aus einem Vorratstank zu einer Brennkraftmaschine nach der Gattung des Patentanspruchs 1 aus. Bei einer derartigen, aus der
DE-PS 35 10 890 bekannten Fördereinrichtung ist ein elektrisch angetriebenes Förderaggregat in einen Stautopf eingesetzt, der seinerseits so im Kraftstofftank angeordnet ist, daß er mit seinem Boden ständig in Anlage am Boden des Kraftstofftankes gehalten wird. Der Stautopf wird dabei mittels einer in seinen Boden eingesetzten Strahlpumpe mit Kraftstoff aus dem Vorratstank befüllt (siehe Figuren 2 und 3), die dazu vom von der zu versorgenden Brennkraftmaschine rücklaufenden Kraftstoffstrom angetrieben wird.

Das Förderaggregat saugt den Kraftstoff aus dem Stautopf über einen Ansaugstutzen an und fördert diesen dann mit erhöhtem Druck in eine an eine Austrittsöffnung bzw. einen Druckstutzen angeschlossene Förderleitung zur Brennkraftmaschine.

Um dabei ein Ansaugen von im Vorratstank befindlichen Schmutzteilchen zum Förderaggregat und zur Brennkraftmaschine zu vermeiden ist an der bekannten Fördereinrichtung ein Kraftstoff-Filter vorgesehen, das dort als Filterscheibe ausgebildet ist und derart am, dem Boden des Vorratstankes zugewandten Ende des Stautopfes befestigt ist, daß es einen zwischen dem Filter und einer unteren Wand des Stautopfes einen Ansaugraum begrenzt, in den der Ansaugstutzen des Förderaggregates ragt.

Dabei weist die bekannte Fördereinrichtung jedoch den Nachteil auf, daß die Montage des Kraftstoff-Filters relativ aufwendig ist, was einen hohen Fertigungsaufwand zur Folge hat.

Zudem bedingt die Filteranordnung bei der bekannten Fördereinrichtung eine relativ hohe Anordnung der Ansaugöffnung der Strahlpumpe, so daß es mit der bekannten Fördereinrichtung nicht möglich ist, bei sehr niedrigem Pegelstand im Vorratstank noch Kraftstoff aus diesem in den Stautopf zu fördern.

### Vorteile der Erfindung

Die erfindungsgemäße Einrichtung zum Fördern von Kraftstoff aus einem Vorratstank zu einer Brennkraftmaschine mit den kennzeichnenden Merkmalen des Patentanspruchs 1 hat demgegenüber den Vorteil, daß durch das Anordnen eines Filterkranzes direkt am Boden des Stautopfes die Ansaugöffnung der Strahlpumpe nahe am Boden des Kraftstofftankes angeordnet werden kann, so daß auch bei nahezu entleertem Tank noch ein sicheres Ansaugen von gefiltertem Kraftstoff aus dem Vorratstank in den Stautopf gewährleistet ist.

Zudem kann durch die einteilige Ausbildung von Filter und Stautopf auf eine zusätzliche Montage verzichtet werden, was den Fertigungsaufwand erheblich verringert. Dies wird noch dadurch unterstützt, daß die Aufnahme für die Strahlpumpe mit in den Filterboden eingeformt wird.

Durch die vorteilhafte versetzte Anordnung der Filterkränze von axial vorstehenden Zähnen (Noppen) wird die Wirkung eines Labyrinthfilters erzielt, deren filternde Wirkung zudem durch die scharfen Kanten an den Zähnen unterstützt wird, an denen die Schmutzpartikel verstärkt hängenbleiben.

Um dabei auch über einen langen Betriebszeitraum ein Verschmutzen des Förderaggregates und der Brennkraftmaschine durch im Kraftstoff befindliche Schmutzpartikel sicher vermeiden zu können, weist die erfindungsgemäße Fördereinrichtung gegenüber der bekannten Einrichtung zum Fördern von Kraftstoff weitere Filter auf, von denen eines der Ansaugöffnung des Förderaggregates vorgeschaltes ist und ein weiteres zwischen die Austrittsöffnung des Förderaggregates und der Förderleitung zur Brennkraftmaschine eingesesetzt ist, wobei auch diese beiden Kraftstoff-Filter mit einem rohrförmigen Gehäuse zur Aufnahme des Förderaggregates eine Baueinheit bilden, die sich einfach in den Stautopf einsetzen läßt und somit den Montageaufwand minimiert.

Weitere Vorteile und vorteilhafte Ausgestaltungen des Gegenstandes der Erfindung sind der Beschreibung, der Zeichnung und den Patentansprüchen entnehmbar.

### Zeichnung

Zwei Ausführungsbeispiele der erfindungsgemäßen Einrichtung zum Fördern von Kraftstoff aus einem Vorratstank zu einer Brennkraftmaschine sind in der Zeichnung dargestellt und werden in der Beschreibung näher erläutert.

Es zeigen die Figur 1 eine vereinfachte Schnittdarstellung der in einem, am Boden des Vorratstankes gehaltenen Stautopf angeordneten Fördereinrichtung, die Figur 2 ein erstes Ausführungsbeispiel des am Boden des Stautopfes angeordneten Filters in einer Ansicht auf den Boden des Stautopfes, bei dem das Filter durch mehrere Kränze von axial vorstehenden Anformungen gebildet ist und die Figur 3 ein zweites Ausführungsbeispiel des Filters, bei dem die versetzt angeordneten Anformungen der Kränze durch Stege jeweils miteinander verbunden sind.

### Beschreibung der Ausführungsbeispiele

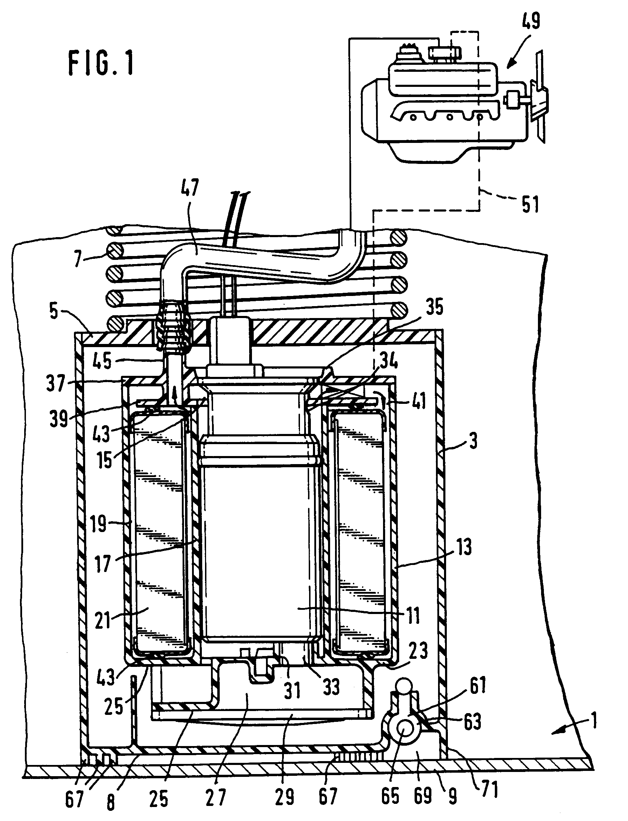

Die in der Figur 1 dargestellte Fördereinrichtung weist einen in einen Kraftstoff-Vorratstank 1 eingesetzten Stautopf 3 auf, der mittels einer auf einen Deckel 5 des Stautopfes 3 wirkenden Druckfeder 7 mit seinem Boden 8 in Anlage am Boden 9 des Vorratstankes 1 gehalten wird. Die Druckfeder 7 stützt sich dabei andererseits an einer nicht dargestellten oberen Wand des Vorratstankes 1, vorzugsweise einem den Vorratstank 1 verschließenden Tankdeckel ab.

Im Stautopf 3 ist ein, ein elektrisch angetriebenes Förderaggregat 11 sowie ein diesem vorgeschaltetes und ein diesem nachgeschaltetes Kraftstoffilter aufnehmendes Gehäuse 13 angeordnet. Das im wesentlichen zylinderförmig ausgebildete Gehäuse 13 weist dabei zwei koaxiale Kammern auf, von denen eine innerhalb eines zentrisch im Gehäuse 13 angeordneten rohrförmigen Führungsteil 17 gebildete erste Kammer 15, das Förderaggregat 11 aufnimmt. Das Führungsteil 17 begrenzt mit seiner zylindrischen Umfangswand eine zweite, das Führungsteil 17 ringförmig umgebende Kammer 19 innerhalb des Gehäuses 13, deren äußere Begrenzung durch die Innenwand des Gehäuses 13 gebildet ist. In diese ringförmige zweite Kammer 19 ist ein der Form der Kammer 19 angepaßtes Ringfilter 21 eingesetzt.

Das Gehäuse 13 weist an seinem einen Ende eine über einen, die zeite Kammer 19 axial begrenzenden Absatz 23 gebildete Querschnittsverringerung auf und ist dort mittels einer Stirnwand 25 verschlossen, die in Verlängerung des Absatzes 23 bis zum Führungsteil 17 reicht und dieses so mit dem Gehäuse 13 verbindet. Die dabei vorzugsweise einstückig mit dem Gehäuse 13 und dem rohrförmigen Führungsteil 17 ausgebildete Stirnwand 25 ist zum Teil topfförmig nach innen eingeformt und bildet so einen Vorraum 27, der an seiner der Stirnwand 25 abgewandten Seite durch ein scheibenförmiges Filter 29 verschlossen wird. Die Stirnwand 25 weist weiterhin in ihrem eingeformten Bereich eine Führungsbohrung 31 auf, durch die ein den Ansauganschluß des Förderaggregates 11 bildender Ansaugstutzen 33 in den Vorraum 27 ragt.

An seinem in die erste Kammer 15 ragenden Ende weist das Förderaggregat 11 eine Austrittsöffnung 34 auf, durch die der geförderte Kraftstoff mit erhöhtem Druck aus dem Förderaggregat 11 in die erste Kammer 15 austritt.

An seiner der Stirnwand 25 abgewandten Seite wird das gemeinsame Gehäuse 13 durch einen doppelwandigen Verschlußdeckel 35 verschlossen, der mit einer oberen Wand 37 das Gehäuse 13 nach außen abdichtet. Eine, gegenüber der oberen Wand 37 axial versetzte untere Wand 39, mit einer geringeren radialen Erstreckung bildet zwischen ihr und der Innenwand des Gehäuses 13 einen Spalt 41, über den der geförderte Kraftstoff aus der ersten Kammer 15 in die zweite Kammer 19 überströmen kann, wobei ein Dichtring 43 an den axialen Stirnflächen des Ringfilters 21 einen einströmseitigen äußeren Bereich der zweiten Kammer 19 von einem austrittseitigen inneren Bereich abtrennt, so daß ein radiales Durchströmen des Ringfilters 21 gewährleistet ist.

Dabei sind im Verschlußdeckel 35 im Bereich der ersten Kammer 15 eine Öffnung zur Durchführung des elektrischen Anschlusses des Förderaggregates 11 und im inneren Bereich der zweiten Kammer 19 eine einen Druckstutzen 45 aufnehmende Öffnung vorgesehen. An diesen Druckstutzen 45 ist eine Förderleitung 47 zur zu versorgenden Brennkraftmaschine 49 angeschlossen, von der eine Rücklaufleitung 51 abführt, die wiederum in nicht näher dargestellter Weise in den Stautopf 3 mündet.

Die Befüllung des Stautopfes 3 mit Kraftstoff aus dem Vorratstank 1 erfolgt mittels einer Strahlpumpe 61, die in eine in den Boden 8 des Stautopfes 3 eingeformte Aufnahmeöffnung 63 eingesetzt ist. Dabei wird die nach dem Prinzip einer Saugstrahlpumpe arbeitende Strahlpumpe 61 im beschriebenen Ausführungsbeispiel von der über die Rücklaufleitung 51 zurückströmende Kraftstoffströmung in bekannter Weise angetrieben. Die in den Figuren 2 und 3 näher gezeigte Ansaugöffnung 65 der Strahlpumpe 61 ist dabei so angeordnet, daß nur Kraftstoff aus dem dem Tankboden 9 nahen Bereich angesaugt wird. Zudem ist die Strahlpumpe 61 radial auswärts durch eine axial vom Boden 8 des Stautopfes 3 vorstehende Wand 71 umgeben, die gewährleistet, daß nur radial einwärts befindlicher Kraftstoff angesaugt wird.

Zur Filterung dieses angesaugten Kraftstoffes sind in einem ersten, in der Figur 2 dargestellten Ausführungsbeispiel zudem am Rand des Bodens 8 des Stautopfes 3 drei Kränze mit axial vom Stautopfboden 8 vorstehenden, vorzugsweise scharfkantigen Zähnen angeordnet, die jeweils versetzt zueinander sind und so ein Labyrinthfilter für den innerhalb der Filterkränze 67 gebildeten Ansaugraum 69 bilden, wobei die Stirnflächen der Zähne 67 und der Wand 71 dichtend am Boden 9 des Vorratstankes 1 gehalten werden.

Die Figur 3 zeigt ein zweites Ausführungsbeispiel des Labyrinthfilters am Boden 8 des Stautopfes 3, bei dem jeweils die benachbarten Zähne der koaxialen Filterkränze durch einen Steg 73 derart miteinander verbunden sind, daß eine Ω-Profilform entsteht, die in Richtung des Filterkranzes weist.

Die erfindungsgemäße Einrichtung zum Fördern von Kraftstoff aus einem Vorratstank 1 zu einer Brennkraftmaschine 49 arbeitet in folgender Weise.

Während des Betriebs des Förderaggregates 11 wird über dessen Ansaugstutzen 33 Kraftstoff aus dem im Stautopf 3 angeordneten kraftstoffgefüllten Vorraum 27 angesaugt. Dieser Kraftstoff wird dabei bei seinem Einströmen vom Vorratstank 1 in den Vorraum 27 bei seinem Durchtritt durch das den Vorraum 27 begrenzende scheibenförmige Filter 29 gefiltert, wobei das scheibenförmige Filter 29 das dem Förderaggregat 11 vorgeschaltete Kraftstoffilter bildet. Im Förderaggregat 11 wird der Kraftstoff in bekannter Weise druckerhöht und strömt dann aus der Austrittsöffnung 34 in die erste Kammer 15 und über den doppelwandigen Verschlußdeckel 35 und den Spalt 41 weiter in die zweite Kammer 19. Dort gelangt er nach radialem Durchströmen des Ringfilters 21 an den Druckstutzen 45, über den der zu fördernde Kraftstoff in die Förderleitung 47 zur Brennkraftmaschine 49 strömt. Das Ringfilter 21 bildet dabei das dem Förderaggregat 11 nachgeschaltete Kraftstoffilter, das eine Beschädigung der Brennkraftmaschine, insbesondere deren Einspritzeinrichtung, infolge Schmutz- oder Abriebpartikeln im Kraftstoff vermeidet.

Die Befüllung des Stautopfes 3 erfolgt dabei mittels der Strahlpumpe 61, die vom von der Brennkraftmaschine 49 rückströmenden Kraftstoff angetrieben wird und dabei Kraftstoff aus dem Ansaugraum 69 unterhalb des Bodens 8 des Stautopfes 3 ansaugt. Dieser angesaugte Kraftstoff wird dabei durch das Hindurchströmen durch die, ein Labyrinthfilter bildenden Kränze von axial vom Stautopfboden 8 vorstehenden Zähne 67 vorgefiltert, so daß ein Zusetzen infolge Verschmutzens der in das Gehäuse 13 des Förderaggregates 11 integrierten Filter 21,29 über eine lange Betriebsdauer vermieden werden kann.

Dabei ist die erfindungsgemäße Anordnung eines der Ansaugöffnung 65 der Strahlpumpe 61 vorgeschalteten Filters am Boden 8 des Stautopfes 3 nicht auf eine Fördereinrichtung der beschriebenen Art beschränkt, sondern kann alternativ auch an allen anderen Fördereinrichtungen vorgesehen werden, bei denen ein in einen Tank eingesetzter Stautopf mittels einer Strahlpumpe an dessen Boden befüllt wird.

## Patentansprüche

1. Einrichtung zum Fördern von Kraftstoff aus einem Vorratstank (1) zu einer Brennkraftmaschine (49), mit einem elektrisch angetriebenen Förderaggregat (11), das einen Ansaugstutzen (33) und eine wenigstens mittelbar mit einer Förderleitung (47) zur Brennkraftmaschine (49) verbundene Austrittsöffnung (34) aufweist, wobei das Förderaggregat (11) in einem Stautopf (3) angeordnet ist, der mittels eines federnden Elementes (7) mit seinem Boden (8) am Boden (9) des Vorratstankes (1) gehalten wird und der mittels einer Strahlpumpe (61) mit Kraftstoff aus dem Vorratstank (1) befüllbar ist, wobei der Ansaugöffnung (65) der Strahlpumpe (61) ein Filter vorgeschaltet ist, dadurch gekennzeichnet, daß das Filter durch wenigstens einen Kranz von axial vom Boden (8) des Stautopfes (3) vorstehenden Anformungen (67) gebildet ist, zwischen denen ein einen Spaltfilter bildenden Durchströmquerschnitt vorgesehen ist und die radial einwärts einen Ansaugraum (69) einschließen, in den die Ansaugöffnung (65) der Strahlpumpe (61) mündet.

2. Einrichtung nach Anspruch 1, dadurch gekennzeichnet, daß mehrere, vorzugsweise drei Kränze von Anformungen (67) das Filter bilden, deren radial hintereinander liegenden Anformungen (67) unter Bildung einer Labyrinthdichtung mit insbesondere Spaltfilterelementen jeweils versetzt zueinander angeordnet sind.

3. Einrichtung nach Anspruch 1, dadurch gekennzeichnet, daß die Anformungen (67) des Filterkranzes als Zähne ausgebildet sind, deren Stirnflächen dichtend am Boden (9) des Vorratstankes (1) anliegen und deren Übergänge zwischen den einzelnen Seitenflächen scharfkantig sind.

4. Einrichtung nach Anspruch 1, dadurch gekennzeichnet, daß der Stautopf (3) und das der Strahlpumpe (61) vorgeschaltete Filter einteilig ausgebildet sind.

5. Einrichtung nach Anspruch 1, dadurch gekennzeichnet, daß die Strahlpumpe (61) in einer entsprechend geformten Aufnahmeoffnung (63) im Boden (8) des Stautopfes (3) angeordnet ist.

6. Einrichtung nach Anspruch 1, dadurch gekennzeichnet, daß die Strahlpumpe (61) von einer, vorzugsweise von der Brennkraftmaschine (49) strömenden Kraftstoffrücklaufmenge angetrieben wird.

7. Einrichtung nach Anspruch 1, dadurch gekennzeichnet, daß dem Ansaugstutzen (33) des Förderaggregates (11) eine Filterscheibe (29) vorgeschaltet ist, die einen, einen Saugraum des Förderaggregates bildenden Vorraum (27) gegen das Innere des Stautopfes (3) verschließt.

8. Einrichtung nach Anspruch 1, dadurch gekennzeichnet, daß zwischen der Austrittsöffnung (34) des Förderaggregates (11) und der Förderleitung (47) zur Brennkraftmaschine (49) ein weiteres, vorzugsweise ringförmiges Filter (21) vorgesehen ist, das in ein zylinderförmiges Gehäuse (13) zur Aufnahme des Förderaggregates (11) eingesetzt ist.

9. Einrichtung nach Anspruch 1, dadurch gekennzeichnet, daß das den Stautopf (3) auf den Boden (9) des Vorratstanks (1) pressende federnde Element durch eine Druckfeder (7) gebildet ist, die zwischen einem Deckel des Stautopfes (5) und einer oberen Gehäusewand des Vorratstanks (1), vorzugsweise einem den Tank verschließenden Tankdeckel eingespannt ist.

10. Einrichtung nach Anspruch 2, dadurch gekennzeichnet, daß die benachbarten Anformungen (67) der einzelnen koaxialen Filterkränze durch Stege (73) derart miteinander verbunden sind, daß sie ein in Umfangsrichtung des Filterkranzes weisendes Ω-Profil bilden.

## Claims

1. Device for feeding fuel out of a supply tank (1) to an internal combustion engine (49), with an electrically driven feed assembly (11) which has an intake port (33) and an outlet orifice (34) connected at least indirectly to a feed line (47) to the internal combustion engine (49), the feed assembly (11) being arranged in a storage pot (3) which is held with its bottom (8) on the bottom (9) of the supply tank (1) by means of a resilient element (7) and which can be filled with fuel from the supply tank (1) by means of a jet pump (61), the intake orifice (65) of the jet pump (61) being preceded by a filter, characterized in that the filter is formed by at least one ring of integrally formed portions (67) which project axially from the bottom (8) of the storage pot (3) and between which a throughflow cross section forming an edge filter is provided and which enclose, radially inwards, an intake space (69), into which the intake orifice (65) of the jet pump (61) opens.

2. Device according to Claim 1, characterized in that a plurality of, preferably three rings of integrally formed portions (67) form the filter, of which the integrally formed portions (67) located radially one behind the other are in each case arranged so as to be offset relative to one another, to form a labyrinth seal with, in particular, edge-filter elements.

3. Device according to Claim 1, characterized in that the integrally formed portions (67) of the filter ring are designed as teeth, the end faces of which bear sealingly on the bottom (9) of the supply tank (1) and of which the transitions between the individual side faces are sharp-edged.

4. Device according to Claim 1, characterized in that the storage pot (3) and the filter preceding the jet pump (61) are designed in one piece.

5. Device according to Claim 1, characterized in that the jet pump (61) is arranged in a correspondingly shaped receiving orifice (63) in the bottom (8) of the storage pot (3).

6. Device according to Claim 1, characterized in that the jet pump (61) is driven by a fuel return quantity preferably flowing from the internal combustion engine (49).

7. Device according to Claim 1, characterized in that the intake port (33) of the feed assembly (11) is preceded by a filter disc (29) which closes a pre-space (27), forming a suction space of the feed assembly, relative to the interior of the storage pot (3).

8. Device according to Claim 1, characterized in that a further preferably annular filter (21) is provided between the outlet orifice (34) of the feed assembly (11) and the feed line (47) to the internal combustion engine (49), the said filter being inserted into a cylindrical housing (13) for receiving the feed assembly (11).

9. Device according to Claim 1, characterized in that the resilient element, pressing the storage pot (3) onto the bottom (9) of the supply tank (1), is formed by a compression spring (7) which is clamped between a cover of the storage pot (5) and an upper housing wall of the supply tank (1), preferably a tank cover closing the tank.

10. Device according to Claim 2, characterized in that the adjacent integrally formed portions (67) of the individual coaxial filter rings are connected to one another by means of webs (73), in such a way that they form an Ω-profile pointing in the circumferential direction of the filter ring.

## Revendications

1. Dispositif servant à transférer du carburant à partir d'un réservoir (1) vers un moteur à combustion interne (49), comprenant un sous-ensemble de transfert (11), entraîné électriquement, qui présente un ajutage d'aspiration (33) et un orifice de sortie (34) relié au moins indirectement par une conduite de transfert (47) au moteur à combustion interne (49), le sous-ensemble de transfert (11) étant disposé dans un pot d'accumulation (3) qui est maintenu au moyen d'un élément à ressort (7) avec son fond (8) sur le fond (9) du réservoir (1), et qui peut être rempli de carburant au moyen d'un éjecteur (61) à partir du réservoir (1), un filtre étant monté en avant de l'orifice d'aspiration (65) de l'éjecteur (6),
caractérisé en ce que
le filtre est constitué par au moins une couronne d'excroissances ou dents (67) faisant saillie sur le fond (8) du pot d'accumulation (3), excroissances entre lesquelles est prévue une section transversale de passage formant un filtre à disques, et qui enferment une chambre d'aspiration (69) radialement en dedans, chambre d'aspiration (69) dans laquelle débouche l'orifice d'aspiration (65) de l'éjecteur (61).

2. Dispositif selon la revendication 1,
caractérisé en ce que
plusieurs couronnes d'excroissances (67), de préférence trois couronnes, forment le filtre dont les excroissances (67), qui se trouvent radialement les unes derrière les autres, sont disposées de façon respectivement décalée les unes par rapport aux autres en formant un joint d'étanchéité à labyrinthe avec en particulier des éléments de filtre à disques.

3. Dispositif selon la revendication 1,
caractérisé en ce que
les excroissances (67) de la couronne de filtre sont constituées comme des dents dont les faces frontales reposent de façon étanche sur le fond (9) du réservoir (1) et dont les passages entre les différentes faces latérales ont des arêtes vives.

4. Dispositif selon la revendication 1,
caractérisé en ce que
le pot d'accumulation (3) et le filtre monté en avant de l'éjecteur (61), sont constitués d'un seul tenant.

5. Dispositif selon la revendication 1,
caractérisé en ce que
l'éjecteur (61) est disposé dans un orifice de réception (63), formé en conséquence, dans le fond (8) du pot d'accumulation (3).

6. Dispositif selon la revendication 1,
caractérisé en ce que
l'éjecteur (61) est entraîné par un débit de carburant de retour s'écoulant de préférence depuis le moteur à combustion interne (49).

7. Dispositif selon la revendication 1,
caractérisé en ce qu'
un disque de filtre (29) est monté en avant de l'ajutage d'aspiration (33) du sous-ensemble de transfert (11), disque de filtre (29) qui ferme une antichambre (27) formant une chambre d'aspiration du sous-ensemble de transfert vers l'intérieur du pot d'accumulation (3).

8. Dispositif selon la revendication 1,
caractérisé en ce qu'
entre l'orifice de sortie (34) du sous-ensemble de transfert (11) et la conduite de transfert (47) allant au moteur à combustion interne (49), il est prévu un autre filtre (21), de préférence de forme annulaire, qui est inséré dans un boitier (13) de forme cylindrique servant à recevoir le sous-ensemble de transfert (11).

9. Dispositif selon la revendication 1,
caractérisé en ce que
l'élément à ressort qui comprime le pot d'accumulation (3) sur le fond (9) du réservoir (1), est constitué par un ressort de compression (7) inséré entre un couvercle du pot d'accumulation (5) et une paroi supérieure du réservoir (1), de préférence un couvercle fermant le réservoir.

10. Dispositif selon la revendication 2,
caractérisé en ce que
les excroissances voisines (67) des différentes couronnes de filtre coaxiales sont reliées les unes aux autres par des entretoises (67) d'une manière telle qu'elles forment un profilé en forme d'Ω orienté dans le sens périphérique de la couronne de filtre.
